# EUROPEAN PATENT SPECIFICATION

(11) **EP 2 941 573 B1**
(45) Date of publication and mention of the grant of the patent: **10.06.2020**
(21) Application number: 14739575.0
(22) Date of filing: 03.07.2014
(51) Int. Cl.: F16B 13/12

(54) **ELONGATED PLUG PROVIDED WITH A PIN-SHAPED BODY HAYING A LONGITUDINAL BORE FOR RECEIVING A NAIL, SCREW OR THE LIKE THEREIN**
LÄNGLICHER STECKER MIT EINEM STIFTARTIGEN KÖRPER MIT EINER LÄNGLICHEN BOHRUNG ZUR AUFNAHME EINES NAGELS, EINER SCHRAUBE ODER DERGLEICHEN
CHEVILLE ALLONGÉE POURVUE D'UN CORPS EN FORME DE GOUPILLE COMPRENANT UN TROU LONGITUDINAL POUR RECEVOIR UN CLOU, UNE VIS OU SIMILAIRE

(30) Priority: 09.07.2013 NL 2011125
(43) Date of publication of application: 11.11.2015
(73) Proprietor: MIREKAJA A.G., 7000 Chur (CH); Balen, Frank Pieter Jacobus, 3844 AH Harderwijk (NL); Jansen, Stefan, 1356 AP Harderwijk (NL)
(72) Inventor: BALEN, Frank Pieter Jacobus, NL-3844 AH Harderwijk (NL); JANSEN, ing. Stefan, 7000 Chur (CH)
(74) Representative: Hooiveld, Arjen Jan Winfried
(86) International application number: PCT/NL2014/050440
(87) International publication number: WO 2015/005773

(56) References cited:
- EP-A1- 0 109 026
- EP-A2- 0 964 169
- EP-B1- 0 934 469
- WO-A1-2014/079546
- AT-B- 292 280
- DE-A1- 3 416 797

## Description

The invention relates to an elongate plug provided with a pin-like body with a longitudinal bore for receiving a nail, screw or the like therein. The plug according to the invention serves particularly for fastening to a surface of concrete or other construction materials such as bricks which may or may not be hollow.

Such a plug is generally known (see the document AT 292280B). The known plug is usually embodied as an "expansion plug", wherein the plug has a diameter smaller than a diameter of a hole drilled in a surface so that it can be inserted easily therein by hand or with a hammer. An "expansion nail" or "expansion screw" inserted into the central bore of the plug ensures that the plug is wedged fixedly in the hole drilled in the surface by means of expansion forces enabled by the design of the plug.

The drawback of the known plug is that it is often found in practice to be insufficiently capable of withstanding a force attempting to drive it out, wherein insufficient reaction forces are generated.

It is the object of the invention to improve this drawback of the prior art, and for this purpose an elongate plug of the invention has the features of claim 1. The body is provided along at least a part of its length with lips which, under the influence of the nail, screw or the like being received therein, are pivotable from a rest position, in which the lips lie at least substantially in the outer surface of the body or extend inward relative to the outer surface of the body, and an active position in which the lips extend outward relative to the outer surface of the body. When the plug is pressed for instance into a pre-drilled hole in a concrete surface and a screw is then screwed into the central bore of the plug, the lips will be pivoted or displaced from the rest position to the active position, i.e. protruding outward. The lips will press themselves fixedly here into the concrete around the pre-drilled hole and be capable of withstanding practically any drive-out force. In the active position the lips therefore protrude outside the outer diameter of the plug (when inactive). The lips are particularly pivotable about a pivot axis extending parallel to the longitudinal direction of the elongate plug.

It is noted that in the context of the invention the elongate plug is manufactured particularly from a plastic, preferably elastically deformable plastic such as polyamide.

In a preferred embodiment of an elongate plug according to the invention the lips comprise lips of the first type, which are pivotable about the pivot axis in the same direction as a screw-in direction of the screw or the like in the longitudinal bore of the body, and lips of the second type which are pivotable about the pivot axis in a direction opposite to the screw-in direction of the screw or the like in the longitudinal bore of the body. The elongate plug is thus prevented from being able to rotate or slip in the pre-drilled hole, for instance as a result of a screw being screwed into the central bore of the plug. The lips of the first type on the one hand and the lips of the second type on the other are preferably arranged offset opposite each other in the body.

In a further preferred embodiment of an elongate plug according to the invention the lips are formed in the body by staple-like incisions in the body. The incisions in the shape of staples provide for block-shaped lips, wherein the lips guarantee a uniformly distributed expansion force as a result of a screw being screwed into the central bore of the plug. The longitudinal bore in the body preferably comprises at the position of the part thereof provided with the lips an oval, preferably elliptical cross-section. The direction of the expansion force is hereby optimally controlled and guided.

In a further preferred embodiment of an elongate plug according to the invention the part of the body provided with the lips comprises grooves extending transversely of the longitudinal direction of the elongate plug for the purpose of receiving drilling dust therein. This drilling dust is also referred to as bore meal. This part of the body particularly has an oval cross-section to enable optimum control of the expansion of the lips from the rest position to the active position.

In a further preferred embodiment of an elongate plug according to the invention the body is provided over at least a part of its length with outward extending wings which each comprise an oblique side oriented toward a screw-in direction of the screw or the like in the longitudinal bore of the body, and a standing side oriented away from the screw-in direction of the screw or the like in the longitudinal bore of the body, wherein the wings narrow toward an insertion outer end of the elongate plug. The wings are arranged particularly on the part of the body remote from an insertion outer end of the elongate plug and/or a central part of the body. The wings function as rotation block, wherein the elongate plug is prevented from being able to rotate in the pre-drilled hole, for instance as a result of a screw being screwed into the central bore of the plug.

In a further preferred embodiment of an elongate plug according to the invention the body is provided along at least a part of its length with outward extending ribs. These ribs also function as rotation block. The part of the body provided with the lips preferably also comprises the wings and the ribs. The ribs preferably have an increasing diameter as seen from the insertion outer end of the plug.

In a further preferred embodiment of an elongate plug according to the invention the body narrows toward an insertion outer end, or tip, of the elongate plug. The insertion outer end of the elongate plug preferably comprises various resilient parts. When for instance a screw is screwed into the central bore of the plug, the parts will expand symmetrically. The parts are particularly provided with grooves extending transversely of the longitudinal direction of the elongate plug for the purpose of receiving drilling dust therein and for improving pressure distribution.

In a further preferred embodiment of an elongate plug according to the invention the body is provided close to an outer end thereof remote from an insertion outer end of the elongate plug with two protrusions which are arranged at a distance from each other and which extend inwardly into the longitudinal bore, wherein the protrusions are configured to prevent an axial impact displacement of the nail, screw or the like in the longitudinal bore of the body. The distance between the protrusions is preferably equal to a pitch of a screw received in the longitudinal bore.

The invention will be further elucidated with reference to figures shown in a drawing, the embodiments in the drawings do not show lips of the first type and the second type both pivotable about the same axis.
- Figure 1 shows a perspective and schematic view of an elongate plug in a preferred variant;
- figures 2 and 3 show a front view and a bottom view of the plug of figure 1;
- figure 4 shows an isometric section of the plug of figure 1;
- figures 5 and 6 show respectively a cross-section and a view of the plug of figure 1; and
- figure 7 shows a longitudinal section of the plug of figure 1.

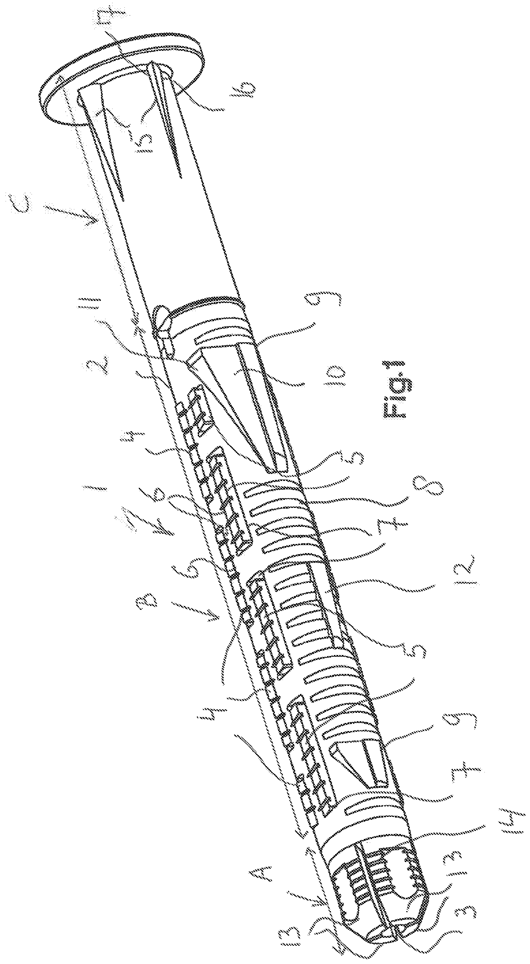

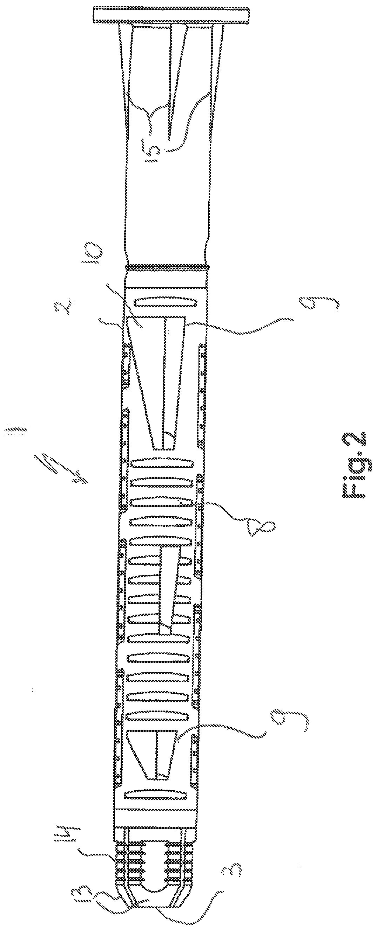

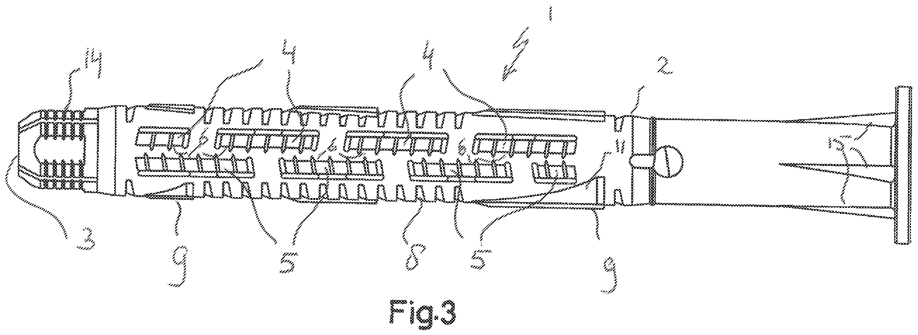

Figures 1, 2 and 3 show an elongate plug 1 consisting of a pin-like body 2 with a longitudinal bore 3 for receiving a nail, screw or the like (not shown) therein. Body 2 is manufactured from one piece of polyamide and consists of three parts: an insertion outer end A, an expansion part B and an outer end C remote from the insertion outer end. At the position of expansion part B body 2 is equipped with lips 4 of the first type and lips 5 of the second type. Lips 4,5 of both types can pivot or swivel about pivot or swivel axes 6 extending parallel to the longitudinal direction of body 2.

For mounting purposes a hole is first drilled in a surface of for instance concrete, after which plug 1 is arranged manually or with a hammer in the pre-drilled hole. A screw for instance (not shown) is subsequently inserted into longitudinal bore 3 and then screwed into body 2. Lips 4, 5 of both types will as a result pivot or swivel in expansion part B from a rest position, in which lips 4,5 extend in the outer surface of body 2, and an active position in which lips 4,5 protrude outward relative to the outer surface of body 2. The lips 4,5 of both types will hereby engage fixedly by means of expansion in the concrete around the pre-drilled hole and thus anchor plug 1 in the hole. As shown, the lips 4 of the first type can pivot about the pivot axes 6 by means of expansion forces in the same direction as a screw-in direction of the screw, while lips 5 of the second type can pivot about pivot axes 6 in a direction opposite to the screw-in direction of the screw. Body 2 is hereby secured in both directions. Lips 4,5 of both types are otherwise formed by incisions 7 in body 2 in the form of staples, wherein lips 4 of the first type on the one hand and lips 5 of the second type on the other are arranged offset opposite each other in body 2. Also arranged in body 2 at the position of expansion part B are grooves 8 which extend transversely of the longitudinal direction of body 2 and which serve to receive drilling dust therein. A locally easier deformability is hereby also realized to enable better engagement in grooves of the surface via expansion forces.

Referring to figures 1, 2 and 3, the body is provided at the position of expansion part B with outward extending wings 9. Each wing 9 has an oblique side 10 oriented toward the screw-in direction of the screw and a standing side 11 oriented away from the screw-in direction of the screw. The body is thus locked in a direction opposite to the screw-in direction. Wings 9 narrow toward the insertion outer end A of body 2. Body 2 likewise comprises at the position of expansion part B outward extending ribs 12 for the purpose of securing body 2 in the hole.

As stated, body 2 has an insertion outer end A narrowing toward the outside. The symmetrical insertion outer end A has four resilient parts or tongues 13 of similar form provided with grooves 14 extending transversely of the longitudinal direction of the body for the purpose of receiving drilling dust therein and for realizing a better local deformability.

The outer end C remote from insertion outer end A comprises wings 15 of a type other than that of wings 9, i.e. each wing 15 likewise has an oblique side 16 oriented toward a screw-in direction of the screw as well as a standing side 17 oriented away from the screw-in direction of the screw. Finally, outer end C comprises a standing flange in order to prevent the possibility of plug 1 being inserted too far into the hole. The flange also serves as cold bridge resistance.

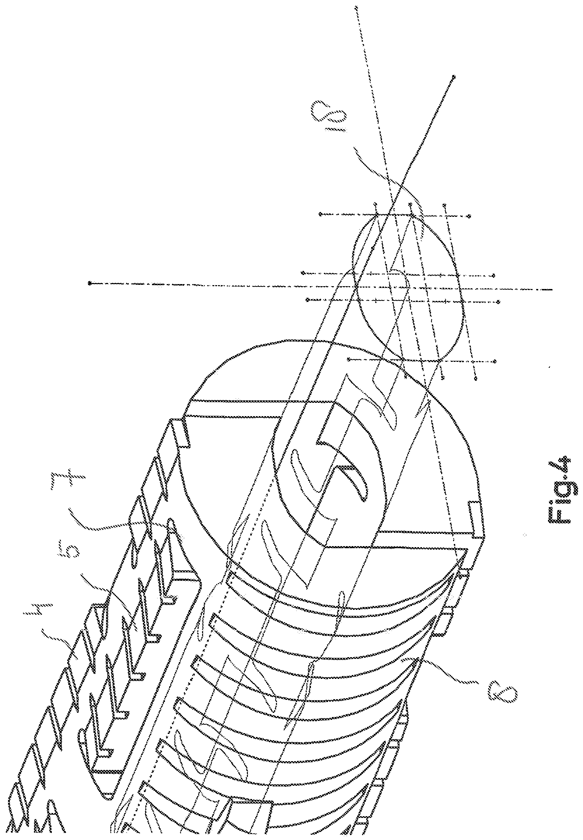

Referring to figure 4, the longitudinal bore 3 in body 2 has an elliptical cross-section 18 at the position of expansion part B. The elliptical form is designed to enable forces to be guided in controlled manner in four directions (laterally and upward and downward), while the elliptical form in part A runs conically.

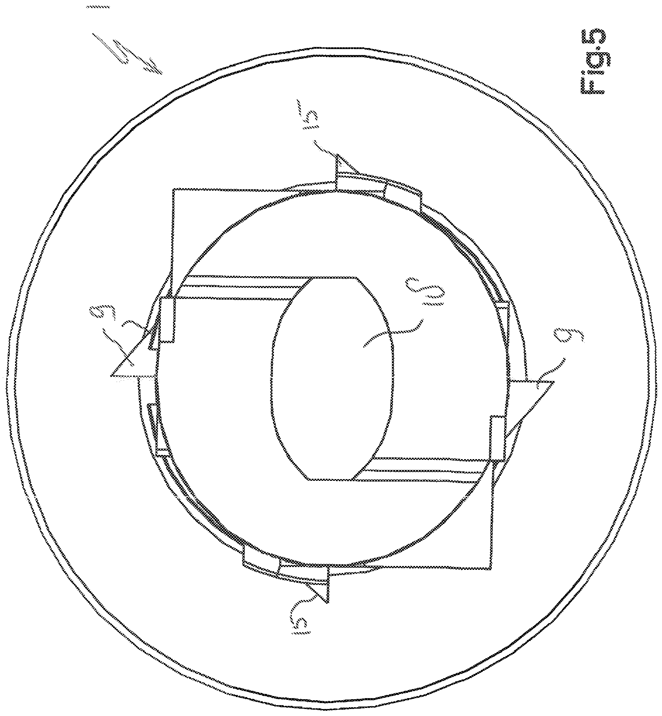

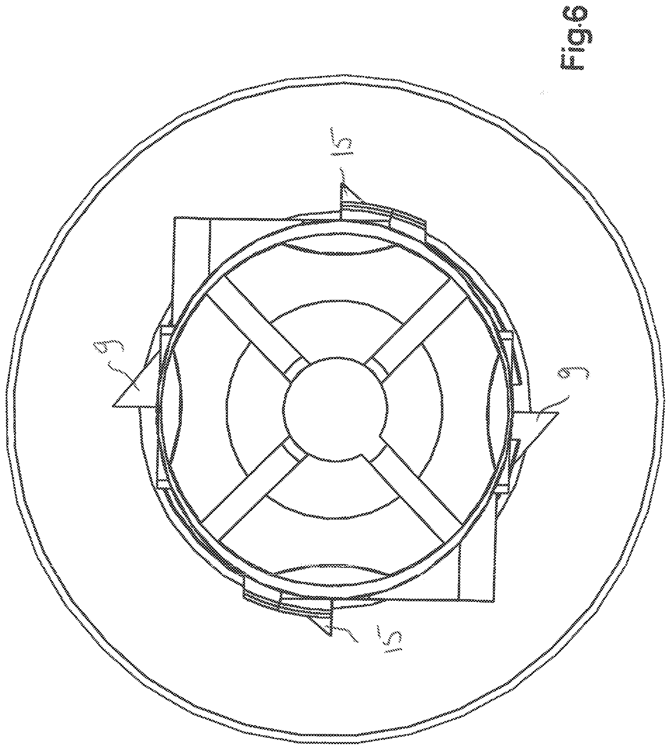

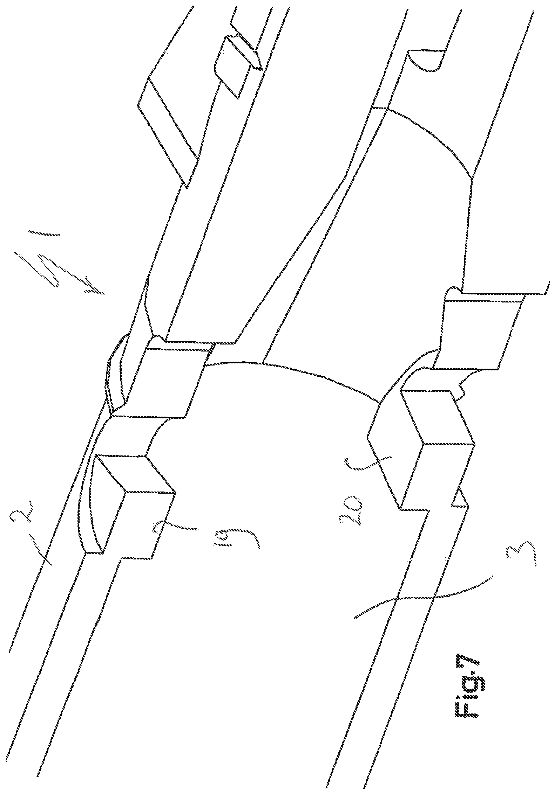

In figures 5, 6 and 7 parts corresponding to those of the previous figures are designated with the same reference numerals. In figure 7 body 2 is provided with two protrusions 19,20 which are arranged at a distance from each other and which extend inwardly into the longitudinal bore. Protrusions 19, 20 serve to prevent an axial impact displacement (in part B) of the screw in longitudinal bore 3 of body 2. The distance 1.9,20 between the protrusions is equal to a pitch of the screw. The angle is likewise equal to the applied pitch.

The invention is not limited to the shown embodiment of plug 1 but also extends to other preferred variants thereof falling within the scope of the appended claims.

## Claims

1. Elongate plug (1) provided with a pin-like body (2) with a longitudinal bore (3) for receiving a nail, screw or the like therein, wherein the body (2) is made of one piece and is provided along at least a part of its length with lips (4,5), which are pivotable between a rest position, in which the lips (4,5) lie at least substantially in the outer surface of the body (2) or extend inward relative to the outer surface of the body (2), and an active position, in which the lips (4,5) extend outward relative to the outer surface of the body (2), wherein the lips (4,5) are pivotable about a pivot axis extending parallel to the longitudinal direction of the elongate plug (1),
**characterized in that** the lips (4,5) comprise lips (4) of the first type, which, upon insertion of the nail, screw or the like in the bore, are pivotable about the pivot axis in a clockwise manner, and lips (5) of the second type, which, upon insertion of the nail, screw or the like in the bore, are pivotable about the pivot axis in a counter-clockwise manner, and that the lips (4) of the first type on the one hand and the lips (5) of the second type on the other are arranged offset opposite each other in the body (2).

2. Elongate plug (1) as claimed in claim 1, wherein the lips (4,5) are formed in the body by staple-like incisions (7) in the body (2).

3. Elongate plug (1) as claimed in claim 1 or 2, wherein the longitudinal bore (3) in the body comprises at the position of the part (B) thereof provided with the lips (4,5) an oval, preferably elliptical cross-section (18).

4. Elongate plug (1) as claimed in any of the foregoing claims 1-3, wherein the part (B) of the body (2) provided with the lips (4,5) comprises grooves (8) extending transversely of the longitudinal direction of the elongate plug (1) for the purpose of receiving drilling dust therein.

5. Elongate plug (1) as claimed in any of the foregoing claims 1-4, wherein the body (2) is provided over at least a part of its length with outward extending wings (9) which each comprise an oblique side (10) oriented toward a screw-in direction of the screw or the like in the longitudinal bore (3) of the body (2), and a standing side (11) oriented away from the screw-in direction of the nail, screw or the like in the longitudinal bore (3) of the body (2), and wherein the wings (9) narrow toward an insertion outer end (A) of the elongate plug (1).

6. Elongate plug (1) as claimed in claim 5, wherein the wings (9) are arranged on a part (C) of the body (2) remote from an insertion outer end (A) of the elongate plug (1) and/or a central part (B) of the body (2).

7. Elongate plug (1) as claimed in any of the foregoing claims 1-6, wherein the body (2) is provided along at least a part of its length with outward extending ribs (12) .

8. Elongate plug (1) as claimed in claim 5, 6 or 7, wherein the part (B) of the body (2) provided with the lips (4,5) also comprises the wings (9) and the ribs (12).

9. Elongate plug (1) as claimed in any of the foregoing claims 1-8, wherein the body (2) narrows toward an insertion outer end (A) of the elongate plug (1).

10. Elongate plug (1) as claimed in claim 9, wherein the insertion outer end (A) of the elongate plug (1) comprises various resilient parts (13).

11. Elongate plug (1) as claimed in claim 10, wherein the parts (13) are provided with grooves (14) extending transversely of the longitudinal direction of the elongate plug for the purpose of receiving drilling dust therein.

12. Elongate plug (1) as claimed in any of the foregoing claims 1-11, wherein the body (2) is provided close to an outer end (C) thereof remote from an insertion outer end (A) of the elongate plug (1) with two protrusions (19,20) which are arranged at a distance from each other and which extend inwardly into the longitudinal bore (3), wherein the protrusions (19,20) are configured to prevent an axial impact displacement of the screw or the like in the longitudinal bore (3) of the body (2).

13. Elongate plug (1) as claimed in claim 12, wherein the distance between the protrusions (19,20) is equal to a pitch of a screw received in the longitudinal bore (3).

## Patentansprüche

1. Länglicher Dübel (1), der mit einem stiftartigen Körper (2) mit einer länglichen Bohrung (3) zur Aufnahme eines Nagels, einer Schraube oder Ähnlichem darin versehen ist, wobei der Körper (2) aus einem Stück hergestellt ist und entlang wenigstens eines Teils seiner Länge mit Lippen (4, 5) versehen ist, die zwischen einer Ruheposition, in der die Lippen (4, 5) im Wesentlichen in der Außenoberfläche des Körpers (2) liegen oder sich relativ zu der Außenoberfläche des Körpers (2) einwärts erstrecken, und einer aktiven Position, in der die Lippen (4, 5) sich relativ zu der Außenoberfläche des Körpers (2) auswärts erstrecken, schwenkbar ist, wobei die Lippen (4, 5) um eine Drehachse, die sich parallel zu der Längsrichtung des länglichen Dübels (1) erstreckt, schwenkbar sind,
**dadurch gekennzeichnet, dass** die Lippen (4, 5) Lippen (4) der ersten Art, die nach dem Einsetzen des Nagels, der Schraube oder Ähnlichem in die Bohrung im Uhrzeigersinn um die Drehachse schwenkbar sind, und Lippen (5) der zweiten Art aufweisen, die nach dem Einsetzen des Nagels, der Schraube oder Ähnlichem in die Bohrung im Gegenuhrzeigersinn um die Drehachse schwenkbar sind, und dass die Lippen (4) der ersten Art einerseits und die Lippen (5) der zweiten Art anderseits entgegengesetzt zueinander versetzt in dem Körper (2) angeordnet sind.

2. Länglicher Dübel (1) nach Anspruch 1, wobei die Lippen (4, 5) in dem Körper durch klammerartige Einschnitte (7) in dem Körper (2) ausgebildet sind.

3. Länglicher Dübel (1) nach Anspruch 1 oder 2, wobei die Längsbohrung (3) in dem Körper an der Position seines Teils (B), der mit den Lippen (4, 5) versehen ist, einen ovalen, vorzugsweise elliptischen Querschnitt (18), aufweist.

4. Länglicher Dübel (1) nach einem der vorhergehenden Ansprüche 1 - 3, wobei der Teil (B) des Körpers (2), der mit den Lippen (4, 5) versehen ist, Nuten (8) aufweist, die sich zu dem Zweck, Bohrstaub darin aufzunehmen, quer zu der Längsrichtung des länglichen Dübels (1) erstrecken.

5. Länglicher Dübel (1) nach einem der vorhergehenden Ansprüche 1 - 4, wobei der Körper (2) wenigstens über einen Teil seiner Länge mit sich auswärts erstreckenden Flügeln (9) versehen ist, die jeweils eine schräge Seite (10), die in Richtung einer Einschraubrichtung der Schraube oder Ähnlichem in der länglichen Bohrung (3) des Körpers (2) orientiert sind, und eine stehende Seite (11), die weg von der Einschraubrichtung des Nagels, der Schraube oder Ähnlichem in der länglichen Bohrung (3) des Körpers (2) orientiert ist, aufweisen, und wobei die Flügel (9) sich in Richtung eines äußeren Einsetzendes (A) des länglichen Dübels (1) verschmälern.

6. Länglicher Dübel (1) nach Anspruch 5, wobei die Flügel (9) auf einem Teil (C) des Körpers (2) entfernt von einem äußeren Einsetzende (A) des länglichen Dübels (1) und/oder einem mittleren Teil (B) des Körpers (2) angeordnet sind.

7. Länglicher Dübel (1) nach einem der vorhergehenden Ansprüche 1 - 6, wobei der Körper (2) entlang wenigstens eines Teils seiner Länge mit sich auswärts erstreckenden Rippen (12) versehen ist.

8. Länglicher Dübel (1) nach Anspruch 5, 6 oder 7, wobei der Teil (B) des Körpers (2), der mit den Lippen (4, 5) versehen ist, auch die Flügel (9) und die Rippen (12) aufweist.

9. Länglicher Dübel (1) nach einem der vorhergehenden Ansprüche 1 - 8, wobei der Körper (2) sich in Richtung eines äußeren Einsetzendes (A) des länglichen Dübels (1) verschmälert.

10. Länglicher Dübel (1) nach Anspruch 9, wobei das äußere Einsetzende (A) des länglichen Dübels (1) verschiedene elastische Teile (13) aufweist.

11. Länglicher Dübel (1) nach Anspruch 10, wobei die Teile (13) mit Nuten (14) versehen sind, die sich dem Zweck, Bohrstaub darin aufzunehmen, quer zu der Längsrichtung des länglichen Dübels erstrecken.

12. Länglicher Dübel (1) nach einem der vorhergehenden Ansprüche 1 - 11, wobei der Körper (2) nahe seinem äußeren Ende (C) entfernt von einem äußeren Einsetzende (A) des länglichen Dübels (1) mit zwei Vorsprüngen (19, 20) versehen ist, die in einem Abstand voneinander angeordnet sind und die sich einwärts in die Längsbohrung (3) erstrecken, wobei die Vorsprünge (19, 20) konfiguriert sind, um eine axiale Stoßverschiebung der Schraube oder Ähnlichem in der Längsbohrung (3) des Körpers (2) zu verhindern.

13. Länglicher Dübel (1) nach Anspruch 12, wobei der Abstand zwischen den Vorsprüngen (19, 20) gleich einer Gewindesteigung einer in der Längsbohrung (3) aufgenommenen Schraube ist.

## Revendications

1. Cheville allongée (1) pourvue d'un corps (2) en forme de goupille comprenant un trou longitudinal (3) pour y recevoir un clou, une vis ou similaire, dans laquelle le corps (2) est fait d'une pièce et est pourvu sur au moins une partie de sa longueur de lèvres (4, 5), qui peuvent pivoter entre une position de repos, dans laquelle les lèvres (4, 5) se trouvent au moins sensiblement dans la surface extérieure du corps (2) ou s'étendent vers l'intérieur par rapport à la surface extérieure du corps (2), et une position active, dans laquelle les lèvres (4, 5) s'étendent vers l'extérieur par rapport à la surface extérieure du corps (2), dans laquelle les lèvres (4, 5) peuvent pivoter autour d'un axe de pivotement s'étendant de manière parallèle à la direction longitudinale de la cheville allongée (1),
**caractérisée en ce que** les lèvres (4, 5) comprennent des lèvres (4) du premier type, qui, lors de l'insertion du clou, de la vis ou similaire dans le trou, peuvent pivoter autour de l'axe de pivotement dans le sens horaire, et des lèvres (5) du second type, qui, lors de l'insertion du clou, de la vis ou similaire dans le trou, peuvent pivoter autour de l'axe de pivotement dans le sens anti-horaire, et **en ce que** les lèvres (4) du premier type d'une part et les lèvres (5) du second type d'autre part sont agencées de façon décalée opposées les unes aux autres dans le corps (2).

2. Cheville allongée (1) selon la revendication 1, dans laquelle les lèvres (4, 5) sont formées dans le corps par des incisions de type agrafe (7) dans le corps (2).

3. Cheville allongée (1) selon la revendication 1 ou 2, dans laquelle le trou longitudinal (3) dans le corps comprend au niveau de la position de la partie (B) de ce dernier dotée des lèvres (4, 5) une coupe transversale (18) ovale, de préférence elliptique.

4. Cheville allongée (1) selon l'une quelconque des revendications précédentes 1 à 3, dans laquelle la partie (B) du corps (2) dotée des lèvres (4, 5) comprend des rainures (8) s'étendant de manière transversale par rapport à la direction longitudinale de la cheville allongée (1) dans le but d'y recevoir de la poussière de forage.

5. Cheville allongée (1) selon l'une quelconque des revendications précédentes 1 à 4, dans laquelle le corps (2) est pourvu sur au moins une partie de sa longueur d'ailettes (9) s'étendant vers l'extérieur qui comprennent chacune un côté oblique (10) orienté vers une direction de vissage de la vis ou similaire dans le trou longitudinal (3) du corps (2), et un côté vertical (11) orienté à l'opposé de la direction de vissage du clou, de la vis ou similaire dans le trou longitudinal (3) du corps (2), et dans laquelle les ailettes (9) se rétrécissent vers une extrémité extérieure d'insertion (A) de la cheville allongée (1).

6. Cheville allongée (1) selon la revendication 5, dans laquelle les ailettes (9) sont agencées sur une partie (C) du corps (2) à distance d'une extrémité extérieure d'insertion (A) de la cheville allongée (1) et/ou une partie centrale (B) du corps (2).

7. Cheville allongée (1) selon l'une quelconque des revendications précédentes 1 à 6, dans laquelle le corps (2) est pourvu sur au moins une partie de sa longueur de nervures (12) s'étendant vers l'extérieur.

8. Cheville allongée (1) selon les revendications 5, 6 ou 7, dans laquelle la partie (B) du corps (2) pourvue des lèvres (4, 5) comprend également les ailettes (9) et les nervures (12).

9. Cheville allongée (1) selon l'une quelconque des revendications précédentes 1 à 8, dans laquelle le corps (2) se rétrécit vers une extrémité extérieure d'insertion (A) de la cheville allongée (1).

10. Cheville allongée (1) selon la revendication 9, dans laquelle l'extrémité extérieure d'insertion (A) de la cheville allongée (1) comprend diverses parties résilientes (13).

11. Cheville allongée (1) selon la revendication 10, dans laquelle les parties (13) sont pourvues de rainures (14) s'étendant de manière transversale par rapport à la direction longitudinale de la cheville allongée dans le but d'y recevoir de la poussière de forage.

12. Cheville allongée (1) selon l'une quelconque des revendications précédentes 1 à 11, dans laquelle le corps (2) est pourvu à proximité d'une extrémité extérieure (C) de ce dernier à distance d'une extrémité extérieure d'insertion (A) de la cheville allongée (1) de deux saillies (19, 20) qui sont agencées à distance l'une de l'autre et qui s'étendent vers l'intérieur dans le trou longitudinal (3), dans laquelle les saillies (19, 20) sont configurées pour empêcher un déplacement par choc axial de la vis ou similaire dans le trou longitudinal (3) du corps (2).

13. Cheville allongée (1) selon la revendication 12, dans laquelle la distance entre les saillies (19, 20) est égale à un pas d'une vis reçue dans le trou longitudinal (3).
